# EUROPÄISCHE PATENTSCHRIFT

(11) **EP 2 038 147 B1**
(45) Veröffentlichungstag und Bekanntmachung des Hinweises auf die Patenterteilung: **10.08.2011**
(21) Anmeldenummer: 07786888.3
(22) Anmeldetag: 28.06.2007
(51) Int. Cl.: B60R 25/00, G07C 9/00, B60Q 3/02

(54) **VERFAHREN ZUM BETREIBEN EINER ZUGANGSANORDNUNG**
METHOD FOR OPERATING AN ACCESS ARRANGEMENT
PROCEDE POUR EXPLOITER UN AGENCEMENT D'ACCES

(30) Priorität: 30.06.2006 DE 102006030298
(43) Veröffentlichungstag der Anmeldung: 25.03.2009
(60) Teilanmeldung: 11153467.3
(73) Patentinhaber: Continental Automotive GmbH, 30165 Hannover (DE)
(72) Erfinder: HEININGER, Franz, 94104 Witzmannsberg (DE)
(86) Internationale Anmeldenummer: PCT/EP2007/056490
(87) Internationale Veröffentlichungsnummer: WO 2008/000795

(56) Entgegenhaltungen:
- EP-A- 1 416 776
- DE-A1-102004 003 701
- JP-A- 2000 045 593

## Beschreibung

Die vorliegende Erfindung betrifft ein Verfahren zum Betreiben einer Zugangsanordnung bzw. Zugangsberechtigungsanordnung für ein Fahrzeug, insbesondere ein Kraftfahrzeug, sowie eine Zugangsanordnung selbst.

Um einen unbefugten Zutritt zu einem Fahrzeug zu verhindern, verwenden moderne Zugangsberechtigungssysteme oder Zugangsanordnungen in Fahrzeugen elektronische Sicherungssysteme, bei denen zur Authentifizierung eines Benutzers eine Datenkommunikation zwischen einer ersten Kommunikationseinrichtung des Fahrzeugs und einer zweiten Kommunikationseinrichtung in einem mobilen Identifikationsgeber des Benutzers, wie einem Schlüssel oder Schlüsselanhänger, erfolgt. Dazu werden zunächst von der ersten Kommunikationseinrichtung des Fahrzeugs in regelmäßigen Zeitabständen Anfragesignale mit einer bestimmten Feldstärke ausgesendet, um zu überprüfen, ob sich ein mobiler Identifikationsgeber in einem Annäherungsbereich um das Fahrzeug befindet. Nähert sich ein mobiler Identifikationsgeber dem Fahrzeug und kann schließlich dessen Anfragesignale empfangen, so wird er auf den Empfang eines Anfragesignals mit einem Datentelegramm umfassend einen charakteristischen Identifikationscode antworten. Im Fahrzeug kann dann eine Prüfung des empfangenen Identifikationscodes stattfinden und bei positiver bzw. erfolgreicher Prüfung die Gültigkeit oder die Berechtigung des sich nähernden Identifikationsgebers festgestellt werden.

Als eine besondere Komfortfunktion bieten heutige Zugangsberechtigungssysteme die Funktionalität des so genannten "WelcomeLighting" ("Begrüßungsbeleuchtung") an, bei dem nach Erkennen eines berechtigten mobilen Identifikationsgebers in dem oben erwähnten Annäherungsbereich um das Fahrzeug, der einen Radius von mehreren Metern um das Fahrzeug umfassen kann, im Fahrzeug vorhandene Beleuchtungsquellen, wie Blinker, Abblendlicht, Innenbeleuchtung, usw. eingeschaltet werden. Die Begrüßungsbeleuchtung kann dabei nach Erkennen des berechtigten Identifikationsgebers für eine bestimmte Zeitdauer angeschaltet bleiben, oder auch solange, bis sich der berechtigte Identifikationsgeber wieder von dem Fahrzeug entfernt (bzw. sich außerhalb des Annäherungsbereichs befindet).

Insbesondere bei so genannten "Stadtautos", die nur relativ wenig bewegt werden, jedoch häufig betreten oder verlassen werden, kann sich das Problem stellen, dass aufgrund der häufigen Auslösung der Begrüßungsbeleuchtung die Batterie des Stadtautos im Laufe der Zeit immer weiter entlädt. Anders ausgedrückt, ist das Verhältnis von Batterieladezeit und Batterieentleerung (zugunsten der Batterieentleerung) besonders schlecht. Als Lösung hierfür wäre es lediglich denkbar, insbesondere für Stadtautos größer dimensionierte Autobatterien zu verwenden, die jedoch sowohl zusätzliches Gewicht, als auch unnötigen großen Platzbedarf bedeuten.

Somit besteht die Aufgabe der vorliegenden Erfindung darin, eine Möglichkeit zum effizienten Betreiben einer Zugangsanordnung für ein Fahrzeug zu schaffen.

Diese Aufgabe wird durch den Gegenstand der unabhängigen Ansprüche gelöst. Vorteilhafte Ausgestaltungen sind Gegenstand der Unteransprüche.

Dabei umfasst ein Verfahren zum Betreiben einer Zugangsanordnung bzw. Zugangsberechtigungsanordnung für ein Fahrzeug, bei der mittels eines mobilen Identifikationsgebers der Zugang zu dem Fahrzeug erlangbar ist, folgende Schritte. Es wird eine Umgebungshelligkeit des Fahrzeugs ermittelt. Außerdem wird die Anwesenheit eines berechtigten mobilen Identifikationsgebers in eine Annäherungszone um das Fahrzeug überprüft. Schließlich wird ein Aktivierungssignal für eine Beleuchtungsquelle bzw. Beleuchtungseinrichtung ausgegeben, wenn die Umgebungshelligkeit des Fahrzeugs einen vorbestimmten Helligkeitswert unterschreitet und die Anwesenheit eines berechtigten mobilen Identifikationsgebers in der Annäherungszone erfasst wird. Das bedeutet, bei der gerade beschriebenen Zugangsanordnung wird eine Beleuchtungsquelle des Fahrzeugs für eine "WelcomeLighting" - Funktionalität (Begrüßungsbeleuchtungs-Funktionalität) nur dann aktiviert, wenn dies notwendig bzw. sinnvoll ist, d.h. wenn sich das Fahrzeug in einer dunklen Umgebung befindet. Auf diese Weise kann der Stromverbrauch durch das effiziente Betreiben der Zugangsanordnung gesenkt werden, und somit auch die Standzeit einer Energiequelle des Fahrzeugs, wie beispielsweise der Autobatterie erhöht werden.

Gemäß einer weiteren vorteilhaften Ausgestaltung wird in definierten Zeitabständen (zu definierten Zeitpunkten) eine Steuereinrichtung von einem ersten Zustand mit geringem Stromverbrauch in einen zweiten Zustand mit mittleren bzw. höheren Stromverbrauch geschaltet, um das Erfassen der Umgebungshelligkeit zu veranlassen, wobei bei Erfassen einer Umgebungshelligkeit oberhalb des vorbestimmten Helligkeitswerts wieder der erste Zustand mit geringem Stromverbrauch bei der Steuereinrichtung eingeleitet wird. Auch dies trägt wieder zur Verringerung des Stromverbrauchs bei, da sich die Steuereinrichtung zwischen den definierten Zeitpunkten in dem ersten Zustand mit geringem Stromverbrauch befindet, und lediglich zu den definierten Zeitpunkten "geweckt" wird, um in dem zweiten Zustand mit mittlerem Stromverbrauch die Umgebungshelligkeit des Fahrzeugs messen zu lassen.

Gemäß der Erfindung wird zunächst die Anwesenheit eines berechtigten mobilen Identifikationsgebers zu überprüfen, und lediglich bei erfolgreicher Überprüfung die Ermittlung der Umgebungshelligkeit des Fahrzeugs durchzuführen. Dabei kann wiederum in definierten Zeitabständen (bzw. zu definierten Zeitpunkten) eine Steuereinrichtung von einem ersten Zustand mit geringem Stromverbrauch in einen dritten zustand mit hohem Stromverbrauch geschaltet werden, um die Anwesenheit des berechtigten mobilen Identifikationsgebers zu überprüfen, wobei bei negativer Überprüfung wieder der erste Zustand mit geringem Stromverbrauch bei der Steuereinrichtung eingeleitet wird. Das bedeutet, auch bei dieser Ausgestaltung kann der Stromverbrauch reduziert werden, da wiederum bei Nichtvorliegen einer ersten Bedingung das Vorliegen der zweiten Bedingung erst gar nicht überprüft wird. Außerdem befindet sich die Steuereinrichtung wieder im Normalfall die längste Zeit, d.h. während der definierten Zeitabstände in dem ersten Zustand mit geringem Stromverbrauch und wird lediglich zu den definierten Zeitpunkten "geweckt", um die Anwesenheit eines berechtigten mobilen Identifikationsgebers zu überprüfen. Wird gemäß der dargestellten Ausgestaltung die Anwesenheit eines berechtigten Identifikationsgebers festgestellt, so wird daraufhin die Ermittlung der Umgebungshelligkeit des Fahrzeugs vorgenommen. Wird auch diesbezüglich ein Umgebungshelligkeitswert unterhalb des vorbestimmten Helligkeitswerts festgestellt, so wird schließlich das Aktivierungssignal für die Beleuchtungsquelle des Fahrzeugs ausgegeben, wird hingegen ein Helligkeitswert oberhalb des vorbestimmten Helligkeitswerts festgestellt, so wird die Steuereinrichtung wieder in den ersten Zustand mit geringem Stromverbrauch geschaltet.

Um eine zuverlässige Ermittlung der Umgebungshelligkeit zu gewährleisten, werden hierbei zumindest zwei Umgebungshelligkeitswerte erfasst. Dies kann insbesondere sinnvoll sein, wenn die Umgebungshelligkeit variiert bzw. sich schnell ändert. Befindet sich ein Fahrzeug beispielsweise an einem Ort, an dem des Öfteren andere Fahrzeuge vorbeifahren oder auch Fußgänger vorbeigehen, so ist es denkbar, dass gerade zu einem Zeitpunkt, an dem ein Umgebungshelligkeitswert erfasst wird, ein anderes Fahrzeug an dem erfassenden Fahrzeug vorbeifährt. Es wird dabei dann ein geringer Umgebungshelligkeitswert bzw. ein Umgebungshelligkeitswert mit geringer Lichtintensität erfasst. Ist das vorbeifahrende Fahrzeug schließlich an dem erfassenden Fahrzeug vorbeigefahren, so kann es vorkommen, dass ein Umgebungshelligkeitswert mit größerer Lichtintensität erfasst wird. Insbesondere wird es dann kompliziert, wenn der erste erfasste Umgebungshelligkeitswert unterhalb des vorbestimmten Helligkeitswerts liegt und der zweite Umgebungshelligkeitswert oberhalb des vorbestimmten Helligkeitswerts liegt. Im ersten Fall wäre somit die erste Bedingung für das Aktivieren der Beleuchtungsquelle gegeben, im zweiten Fall nicht. Um schließlich diese unsichere Situation bezüglich der tatsächlichen Umgebungshelligkeit zu lösen, ist es dabei denkbar, dass insbesondere bei Vorliegen eines deutlichen Unterschieds zwischen zwei erfassten Umgebungshelligkeitswerten (ein vorbestimmter Differenzwert bezüglich der erfassten Umgebungshelligkeitswerte wird überschritten) oder bei Vorliegen eines Umgebungshelligkeitswertes oberhalb des vorbestimmten Helligkeitswerts und eines zweiten Umgebungshelligkeitswerts unterhalb des vorbestimmten Helligkeitswerts zumindest ein weiterer Umgebungshelligkeitswert für die Ermittlung der (tatsächlichen) Umgebungshelligkeit zusätzlich erfasst wird. Wird hierbei festgestellt, dass der weitere erfasste Umgebungshelligkeitswert beispielsweise dem ersten erfassten Umgebungshelligkeitswert entspricht, so kann angenommen werden, dass der zweite erfasste Umgebungshelligkeitswert lediglich einer kurzfristigen situationsabhängigen Änderung (z.B. einen vorbeifahrenden Fahrzeug, usw.) zuzuschreiben ist, und deshalb für die Ermittlung der Umgebungshelligkeit nicht zu berücksichtigen ist. Es ist jedoch für die Bestimmung der Umgebungshelligkeit denkbar, eine bestimmte Anzahl von Messungen (beispielsweise 11 Messungen) durchzuführen und den Umgebungshelligkeitswert (bzw. dessen Tendenz, ob unterhalb oder oberhalb des vorbestimmten Helligkeitswerts) als den tatsächlichen Umgebungshelligkeitswert (bzw. die tatsächliche Tendenz) zu verwenden, der bei der Mehrzahl der Messungen erfasst worden ist. Schließlich kann gemäß einer weiteren Möglichkeit eine Mehrzahl von Umgebungshelligkeitswerten erfasst werden, deren Mittelwert gebildet werden, und der Mittelwert mit dem vorbestimmten Helligkeitswert verglichen werden, um zu entscheiden, ob die Umgebungshelligkeit gering genug ist, um eine Beleuchtungsquelle (beispielsweise für eine Begrüßungsbeleuchtung) zu aktivieren.

Gemäß einer weiteren vorteilhaften Ausgestaltung ist es denkbar, nach erfolgreicher Überprüfung der Anwesenheit eines berechtigten mobilen Identifikationsgebers eine Vorauthentifizierung seitens des Fahrzeugs mit dem Identifikationsgeber durchzuführen, bei dem im Gegensatz zur Überprüfung einer Berechtigung des mobilen Identifikationsgebers eine Mehrzahl von Datentelegrammen zwischen Fahrzeug und Identifikationsgeber und somit ein komplexerer Identifikationscode ausgetauscht wird. Bei erfolgreicher Vorauthentifizierung kann dann beispielsweise nach Betätigung einer Türhandhabe der Zugang zum Fahrzeug gewährt werden.

Gemäß eines weiteren Aspekts der Erfindung wird eine Zugangsanordnung für ein Fahrzeug, insbesondere Kraftfahrzeug geschaffen, bei der mittels eines berechtigten mobilen Identifikationsgebers der Zugang zu dem Fahrzeug erlangbar ist. Dabei hat die Zugangsanordnung einen Helligkeitssensor zum Erfassen der Umgebungshelligkeit des Fahrzeugs. Der Helligkeitssensor kann dabei beispielsweise als eine Fotodiode, wie eine Silizium-Fotodiode, vorteilhafter Weise mit eingebautem Farbkorrekturfilter für den sichtbaren Bereich, ausgebildet sein. Ferner hat die Zugangsanordnung eine Kommunikationseinrichtung bzw. eine Sende-/Empfangseinrichtung zum Überprüfen der Anwesenheit eines berechtigten mobilen Identifikationsgebers in einem Annäherungsbereich um das Fahrzeug. Außerdem hat die Zugangsanordnung eine Steuereinrichtung zum Ausgeben eines Aktivierungssignals für eine Beleuchtungsquelle des Fahrzeugs, wenn die Umgebungshelligkeit einen vorbestimmten helligkeitswert unterschreitet und die Anwesenheit eines berechtigten mobilen Identifikationsgebers in der Annäherungszone bzw. dem Annäherungsbereich erfasst wird. Die mit dem Aktivierungssignal zu aktivierende Beleuchtungsquelle kann dabei eine am Fahrzeug bereits vorhandene Beleuchtungsquelle, wie ein oder mehrere Blinker, das Abblendlicht, usw. umfassen. Wiederum kann durch das Einbeziehen der Umgebungshelligkeit des Fahrzeugs zum Auslösen bzw. Aktivieren der Beleuchtungsquelle, beispielsweise für eine Begrüßungsbeleuchtung, eine Einsparung beim Stromverbrauch realisiert werden, da lediglich bei geringen Umgebungshelligkeitswerten die Beleuchtungsquelle aktiviert wird.

Gemäß einer vorteilhaften Ausgestaltung ist der Steuereinrichtung eine elektronische Zeitmesseinrichtung bzw. ein Timer zugeordnet, der die Steuereinrichtung von einem ersten Zustand mit geringem Stromverbrauch in einen zweiten Zustand mit höherem Stromverbrauch versetzt (d.h. die Steuereinrichtung "aufweckt"), in dem die Steuereinrichtung den Helligkeitssensor zur Erfassung der Umgebungshelligkeit ansteuert. Der Timer kann dabei ein externer Timer sein, der über eine Signalleitung mit der Steuereinrichtung verbunden ist, oder kann als interner Timer der Steuereinrichtung ausgebildet sein.

Gemäß einer weiteren vorteilhaften Ausgestaltung ist der Steuereinrichtung eine elektronische Zeitmesseinrichtung bzw. ein Timer zugeordnet, der die Steuereinrichtung von einem ersten Zustand mit geringem Stromverbrauch in einen dritten Zustand mit hohem Stromverbrauch versetzt, in dem die Steuereinrichtung die Sende-/Empfangseinrichtung zum Überprüfen der Anwesenheit des mobilen Identifikationsgebers ansteuert. Diesbezüglich kann die Steuereinrichtung derart ausgebildet sein, dass sie wieder in den ersten Zustand übergeht, wenn kein mobiler Identifikationsgeber in dem Annäherungsbereich erfasst wurde. Gemäß der Erfindung ist die Steuereinrichtung derart ausgebildet, dass sie nach erfolgreicher Überprüfung der Anwesenheit eines berechtigten mobilen Identifikationsgebers den Helligkeitssensor ansteuert, um die Umgebungshelligkeit des Fahrzeugs erfassen zu lassen. Wird von dem Helligkeitssensor eine Umgebungshelligkeit festgestellt, die unterhalb dem vorbestimmten Helligkeitswert liegt, so wird die Steuereinrichtung das Aktivierungssignal für die Beleuchtungsquelle ausgeben, wobei bei einem erfassten Umgebungshelligkeitswert oberhalb dem vorbestimmten Helligkeitswert die Steuereinrichtung wieder in den ersten Zustand mit geringem Stromverbrauch übergeht.

Schließlich wird gemäß einem dritten Aspekt der Erfindung ein Kraftfahrzeug mit einer gerade beschriebenen Zugangsanordnung bzw. einer Ausgestaltung hiervon geschaffen.

Vorteilhafte Ausgestaltungen des oben dargestellten Verfahrens sind, soweit im Übrigen auf die Anordnung bzw. das Kraftfahrzeug übertragbar, auch als vorteilhafte Ausgestaltung der Anordnung bzw. des Kraftfahrzeugs anzusehen.

Im Folgenden sollen nun beispielhafte Ausführungsformen der vorliegenden Erfindung bezugnehmend auf die beiliegenden Zeichnungen näher erläutert werden. Es zeigen:
- Figur 1: eine schematische Darstellung eines schlüssellosen elektronischen Zugangsberechtigungssystems bzw. ei- ner Zugangsanordnung in einem Fahrzeug gemäß einer Ausführungsform der Erfindung;
- Figur 2: ein Diagramm zur Veranschaulichung der Bedingung, bei welcher Umgebungshelligkeit des Fahrzeugs eine Beleuchtungsquelle aktiviert werden soll;
- Figur 3: eine schematische Darstellung zur Veranschaulichung der Lichtsteuerung für eine Beleuchtungsquelle in Abhängigkeit von zwei Bedingungen;
- Figur 4: ein Ablaufdiagramm zum Darstellen des Betriebs einer Zugangsanordnung, die der Erfindung nicht entspricht;
- Figur 5: ein Ablaufdiagramm zum Darstellen des Betriebs einer Zugangsanordnung gemäß der Erfindung.

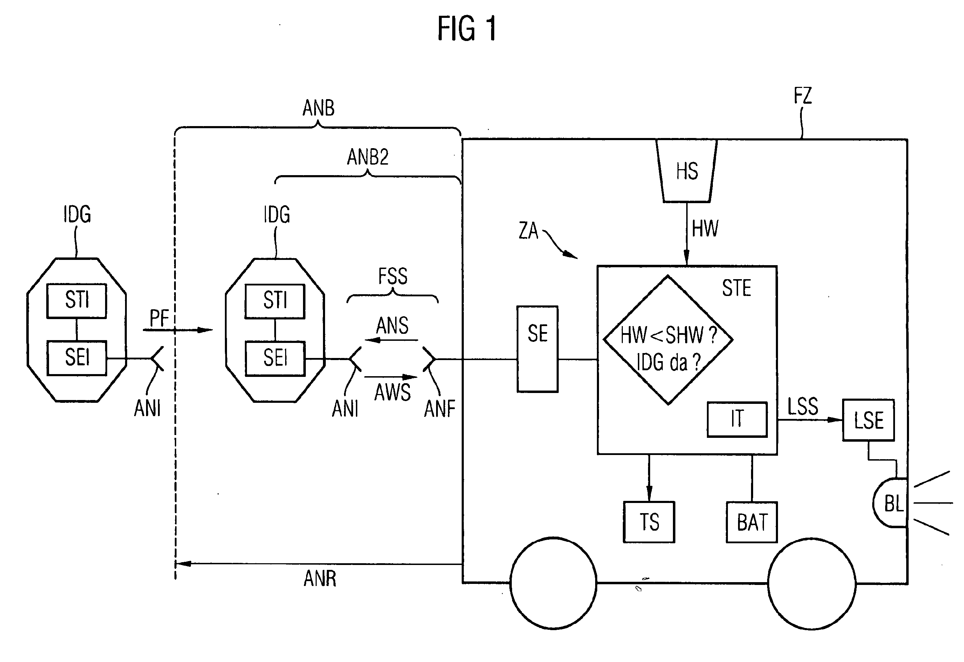

Es sei zunächst auf Figur 1 verwiesen, in der ein Zugangsberechtigungssystem bzw. eine Zugangsanordnung ZA gezeigt ist, welche für die Anwendungen in einem Fahrzeug, hier dem Kraftfahrzeug FZ, ausgelegt ist. Die Zugangsanordnung ZA umfasst dabei einen Helligkeitssensor HS zum Erfassen der Umgebungshelligkeit des Kraftfahrzeugs FZ. Der Helligkeitssensor HS kann beispielsweise als eine Fotodiode mit eingebautem Farbkorrekturfilter für den sichtbaren Bereich ausgebildet sein und (Umgebungs-)Helligkeitswerte HW an eine Steuereinrichtung STE liefern, damit diese den Helligkeitswert HW mit einem vorbestimmten Helligkeitsschwellwert SHW vergleichen kann. Des Weiteren umfasst die Zugangsanordnung ZA eine Sende-/Empfangseinrichtung SE, die in der Lage ist, über eine Antenne ANF bzw. eine Funkschnittstelle FSS Funksignale bzw. Datentelegramme mit einem oder mehreren mobilen Identifikationsgebern, hier dem Identifikationsgeber IDG, auszutauschen. Wie es später noch genauer erläutert werden wird, sendet die Sende-/Empfangseinrichtung SE Anforderungssignale mit einer bestimmten Signalfeldstärke aus, so dass nur ein Identifikationsgeber IDG, der sich in einem Annäherungsbereich ANB um das Fahrzeug befindet die Anfragesignale der Sende-/Empfangseinrichtung SE empfangen kann und nach einem Empfang ein entsprechendes Antwortsignal beispielsweise mit einer kurzen Identifikationsgeberkennung zur Sende-/Empfangseinrichtung SE zurücksenden kann. Diese von der (fahrzeugseitigen) Sende-/Empfangseinrichtung empfangene Identifikationsgeberkennung kann dann beispielsweise von er Sende-/Empfangseinrichtung SE selbst oder von der damit verbundenen (fahrzeugseitigen) Steuereinrichtung STE ausgewertet werden, um eine Zugehörigkeit des Identifikationsgebers IDG zu dem Kraftfahrzeug FZ festzustellen.

Die Steuereinrichtung STE ist schließlich dafür ausgelegt, in Abhängigkeit der erfassten Umgebungshelligkeit und einer festgestellten Anwesenheit bzw. Abwesenheit eines ID-Gebers in dem Annäherungsbereich um das Kraftfahrzeug FZ ein Lichtsteuersignal LSS an eine Lichtsteuereinrichtung abzugeben, welche schließlich eine Beleuchtungseinrichtung bzw. Beleuchtungsquelle BL steuert. Die Beleuchtungseinrichtung BL kann dabei beispielsweise einen oder mehrer Blinker des Kraftfahrzeugs FZ, das Abblendlicht, die Fahrgastzellenbeleuchtung, usw. umfassen.

Zur Versorgung mit Strom hat das Fahrzeug eine Batterie BAT, die aus Gründen der übersichtlicheren Darstellung lediglich mit der Steuereinrichtung STE verbunden ist, jedoch auch die übrigen Komponenten des Kraftfahrzeugs FZ mit Energie versorgt.

Nun sei auf den linken Abschnitt von Figur 1 verwiesen, in der der mobile Identifikationsgeber IDG dargestellt ist, der beispielsweise als ein elektronischer Schlüssel ausgebildet sein kann. Der Identifikationsgeber IDG ist hier sehr schematisch dargestellt und umfasst eine Antenne ANI zum Empfangen von über die fahrzeugseitige Antenne ANF abgestrahlte Funksignale oder Datentelegramme, welche dann nach dem Empfangen einer (identifikationsgeberseitigen) Sende-/Empfangseinrichtung zugeleitet werden, die die Funksignale bzw. Datentelegramme verarbeitet und schließlich einer identifikationsgeberseitigen Steuereinrichtung STI zuleitet.

Befindet sich ein Identifikationsgeber IDG, wie ganz links in Figur 1 dargestellt, außerhalb des Annäherungsbereich ANB um das Kraftfahrzeug FZ, d.h. ist sein Abstand zum Kraftfahrzeug FZ größer als der Annäherungsabstand ANR, so wird der Identifikationsgeber IDG keine Anfragesignale empfangen, die von der fahrzeugseitigen Sende-/Empfangseinrichtung SE über die Antenne ANF abgestrahlt werden. Bewegt sich hingegen der Identifikationsgeber IDG in Richtung des Pfeils PF auf das Kraftfahrzeug FZ zu (weil sich auch ein Kraftfahrzeugnutzer mit dem Identifikationsgeber IDG in der Tasche auf das Kraftfahrzeug FZ zu bewegt, so gelangt der Identifikationsgeber IDG schließlich in den Annäherungsbereich ANB des Kraftfahrzeugs FZ. Hier wird er schließlich über die Antenne ANI ein Anfragesignal ANS des Kraftfahrzeugs FZ empfangen, mittels der Sende-/Empfangseinrichtung SEI verarbeiten und mittels der Steuereinrichtung STI auswerten. Schließlich wird die Steuereinrichtung STI über die Sende-/Empfangseinrichtung SEI und die Antenne ANI ein Antwortsignal AWS aussenden, in dem eine kurze Schlüsselkennung oder Identifikationsgeberkennung enthalten ist. Wie bereits erwähnt, kann diese Schlüsselkennung über die Antenne ANF und die fahrzeugseitige Sende-/Empfangseinrichtung zur Steuereinrichtung STE weitergeleitet werden, wo sie schließlich ausgewertet wird, ob es sich bei dem Identifikationsgeber um einen berechtigten bzw. dem Fahrzeug FZ zugeordneten Identifikationsgeber handelt.

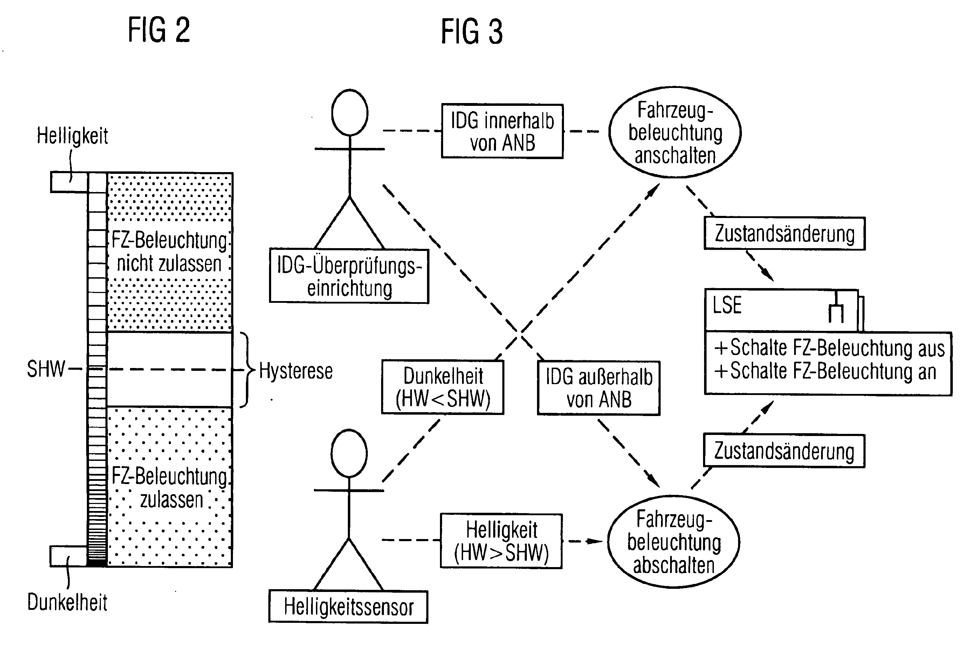

Es sei nun auf Figur 3 verwiesen, in der eine schematische Darstellung zur Veranschaulichung der Zustände bzw. Bedingungen für eine Lichtersteuerung bzw. Beleuchtungssteuerung der Beleuchtungseinrichtung BL gezeigt sind. Auf der linken Seite von Figur 3 sind dabei zwei so genannte Aktoren abgebildet, nämlich eine Identifikationsgeber-Überprüfungseinrichtung (die beispielsweise durch die fahrzeugseitige Sende-/Empfangseinrichtung SE und eventuell durch die Steuereinrichtung STE repräsentiert sein kann) sowie ein Helligkeitssensor (entsprechend dem Helligkeitssensor HS von Figur 1). Wie bereits oben erwähnt, liefern diese beiden Aktoren Werte, die schließlich in der Steuereinrichtung STE gemäß vorbestimmter Bedingungen ausgewertet werden, um in Abhängigkeit der Erfüllung der vorbestimmten Bedingungen die Beleuchtungseinrichtung BL anzusteuern, um eine Komfortfunktion der Zugangsanordnung ZA, nämlich ein "WelcomeLighting" (Begrüßungsbeleuchtung) zu realisieren.

Ausgehend von einem Trigger, dass sich ein berechtigter mobiler Identifikationsgeber (vergleiche Erläuterung zu Figur 1) innerhalb des Annäherungsbereichs ANB des Fahrzeugs FZ befindet und ausgehend von dem Trigger, dass eine Umgebungshelligkeit unterhalb des vorbestimmten Helligkeitsschwellwerts SHW von dem Helligkeitssensor erfasst wurde, wird (in der Steuereinrichtung) der Zustand erreicht, bei dem die Beleuchtungseinrichtung BL bzw. Fahrzeugbeleuchtung anzuschalten ist. Andererseits wird ausgehend von einem Trigger, dass sich ein berechtigter mobiler Identifikationsgeber außerhalb des Annäherungsbereichs ANB des Fahrzeugs FZ befindet und ausgehend von dem Trigger, dass der Helligkeitssensor eine Umgebungshelligkeit erfasst hat, deren Wert oberhalb des vordefinierten Helligkeitsschwellwerts liegt, ein Zustand erreicht, bei dem die Beleuchtungseinrichtung BL bzw. Fahrzeugbeleuchtung nicht anzuschalten oder abzuschalten ist. Eine entsprechende Realisierung eines jeweiligen Zustands ist dann der Lichtsteuereinrichtung LSE mitzuteilen, die die jeweilige Zustandsänderung im Ergebnis umzusetzen hat, nämlich entweder die Fahrzeugbeleuchtung auszuschalten oder die Fahrzeugbeleuchtung anzuschalten.

Es sei nun auf Figur 2 verwiesen, in der eine schematische Darstellung des Wertebereichs des von dem Helligkeitssensor HS gemessenen Helligkeitswerts dargestellt ist. Der Helligkeitswert reicht von einem Wert mit niedriger Lichtintensität, durch den Dunkelheit repräsentiert wird, bis zu einem Wert mit hoher Lichtintensität, mit dem Helligkeit repräsentiert wird. Des Weiteren ist ein vordefinierter Helligkeitswert bzw. Helligkeitsschwellenwert SHW ungefähr in der Darstellung in der Mitte des Wertebereichs des Helligkeitswerts HW eingezeichnet. Wie oben bereits erläutert, kann zur Ermittlung der (tatsächlichen) Umgebungshelligkeit nicht nur ein Helligkeitswert HW von dem Helligkeitssensor HS erfasst werden, sondern eine Mehrzahl von Helligkeitswerten. Dies hat den Vorteil, dass eine Schwankung der erfassten Helligkeitswerte analysiert und eventuell ausgeglichen werden kann. Wird beispielsweise ein erster Umgebungshelligkeitswert erfasst während beispielsweise ein großer LKW (Lastkraftwagen) an dem Kraftfahrzeug FZ vorbeifährt, so kann bei dieser Messung ein Helligkeitswert mit niedriger Lichtintensität erfasst werden. Ist der LKW schließlich an dem Fahrzeug FZ vorbeigefahren, so wird ein weiterer erfasster Helligkeitswert eine höhere Lichtintensität repräsentieren. Insbesondere wenn beide erfassten Helligkeitswerten in der Nähe des vorbestimmten Helligkeitsschwellenwerts SHW liegen, ein Helligkeitswert unterhalb des Schwellenwerts, der andere Helligkeitswert oberhalb des Schwellenwerts, so wäre es für die Steuereinrichtung STE nun schwierig zu entscheiden, ob die Fahrzeugbeleuchtung für eine Begrüßungsbeleuchtung einzuschalten ist oder nicht. Durch erfassen von mehr als den gerade erwähnten zwei Helligkeitswerten kann nun auf verschiedene Weise überprüft werden, welcher Helligkeitswert dem "tatsächlichen" Umgebungshelligkeitswert entspricht. Durch Erfassen einer Mehrzahl von Helligkeitswerten, beispielsweise elf Helligkeitswerten hintereinander, kann beispielsweise festgelegt werden, dass eine "tatsächliche" Umgebungshelligkeit größer dem vorbestimmten Helligkeitswert SHW vorliegt, wenn die Mehrzahl der erfassten Helligkeitswerte oberhalb des vorbestimmten Helligkeitswerts SHW liegt. Liegt die Mehrzahl der erfassten Helligkeitswerte unterhalb des vorbestimmten Helligkeitswerts SHW, so kann angenommen werden, dass die "tatsächliche" Umgebungshelligkeit einen Wert unterhalb des vorbestimmten Helligkeitswerts SHW aufweist. Durch Vorsehen der in Figur 2 eingezeichneten Hysterese wird somit das Verfahren zum Ermitteln einer Umgebungshelligkeit weniger schwankungsanfällig. Es sei deshalb auch für die Erläuterung der folgende Figuren darauf hingewiesen, dass eine Ermittlung einer Umgebungshelligkeit entweder auf einer Erfassung eines Umgebungshelligkeitswerts durch den Helligkeitssensor HS basieren kann, oder auf einer Mehrzahl von erfassten Helligkeitswerten, wie gerade erläutert.

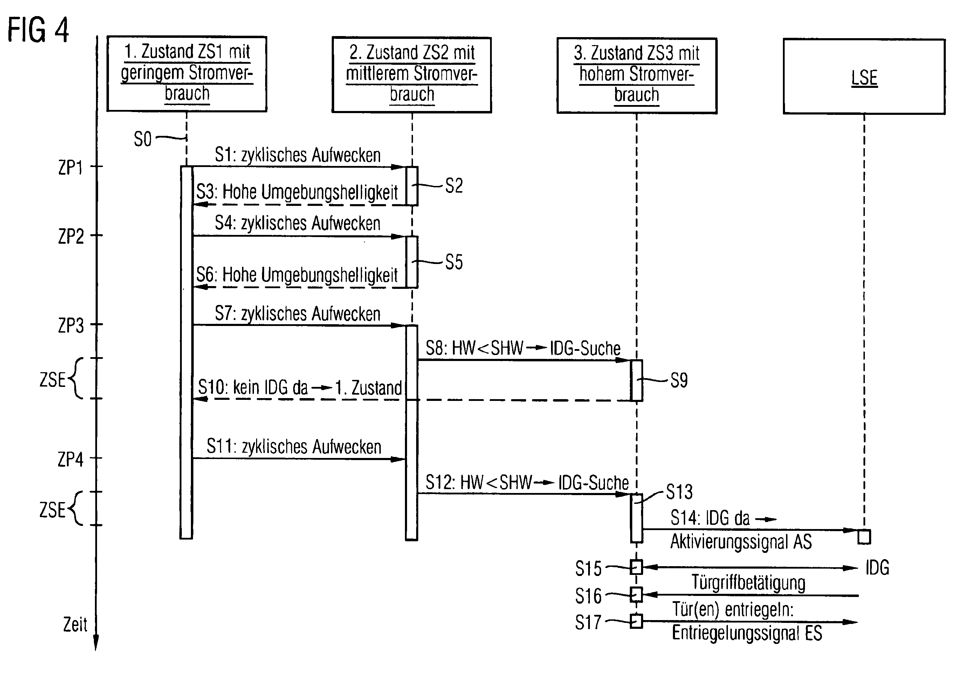

Es sei nun auf Figur 4 verwiesen, in der ein Ablaufdiagramm zum Betreiben der Zugangsanordnung ZA von Figur 1 gemäß einer ersten Ausführungsform, die der Erfindung nicht entspricht erläutert ist. Zum Sparen von Strom bzw. Energie wird dabei in einem Ausgangszustand bzw. einem ersten Schritt S0 angenommen, dass sich die Steuereinrichtung STE des Fahrzeugs in einem ersten Zustand ZS1 mit geringem Stromverbrauch befindet. In definierten Zeitabständen bzw. zu bestimmten Zeitpunkten ZP1 (oder ZP2, ZP3, ZP4) wird eine interne Zeitmesseinrichtung bzw. ein interner Timer IT (vergleiche Figur 1) der Steuereinrichtung STE die Steuereinrichtung STE aufwecken bzw. in einen zweiten Zustand ZS2 mit mittlerem (oder bezüglich dem ersten Zustand höheren) Stromverbrauch versetzen. Ein derartiges zyklisches "Aufwecken" geschieht beispielsweise im Schritt S1. In Schritt S2, d.h. in dem zweitem Zustand steuert nun die Steuereinrichtung STE den Helligkeitssensor HS an, damit dieser einen Umgebungshelligkeitswert erfasst und diesen zur Steuereinrichtung STE leitet. Die Steuereinrichtung STE vergleicht nun den empfangenen Helligkeitswert HW (vergleiche Figur 2) mit dem vorbestimmten Helligkeitsschwellenwert SHW und stellt in diesem Fall von Schritt S2 fest, dass der erfasste Helligkeitswert oberhalb des vorbestimmten Helligkeitsschwellwerts SHW liegt, und somit die Bedingung für das Einschalten einer Fahrzeugbeleuchtung für eine Begrüßungsbeleuchtung nicht gegeben ist. Wie bereits erwähnt, kann zur Ermittlung der "tatsächlichen" Umgebungshelligkeit nicht nur ein Helligkeitswert erfasst werden, sondern mehrere Helligkeitswerte, wobei aus Gründen der einfachen Darstellung lediglich ein Helligkeitswert zur Ermittlung des tatsächlichen Umgebungshelligkeitswerts hier nun verwendet wird.

Da in Schritt S2 die "Helligkeitsbedingung" nicht gegeben war, wird in Schritt S3 die Steuereinrichtung STE wieder in den ersten Zustand ZS1 mit geringem Stromverbrauch übergehen.

Entsprechend wird zum Zeitpunkt ZP2 in Schritt S4 die Steuereinrichtung STE wieder aufgeweckt, wobei sie in Schritt S5 einen Umgebungshelligkeitswert HW erfassen lässt und gemäß Schritt S6 wieder in den Zustand ZS1 mit geringem Stromverbrauch übergeht, da der erfasste bzw. ermittelte Umgebungshelligkeitswert oberhalb des vorbestimmten Helligkeitswerts gelegen ist.

Nun wird zu einem Zeitpunkt ZP3 in Schritt S7 wiederum die Steuereinrichtung STE von dem internen Timer IT geweckt und in den zweiten Zustand ZS2 versetzt. Die Steuereinrichtung STE steuert den Helligkeitssensor HS an, um die Umgebungshelligkeit erfassen zu lassen, wobei nun der erfasste Umgebungshelligkeitswert unterhalb dem vorbestimmten Helligkeitswert SHW liegt. Somit geht die Steuereinrichtung STE in einen dritten Zustand ZS3 mit hohem Stromverbrauch über, in dem sie die fahrzeugseitige Sende-/Empfangseinrichtung SE ansteuert, damit diese nach einem mobilen Identifikationsgeber in dem Annäherungsbereich ANB um das Fahrzeug FZ sucht. Die fahrzeugseitige Sende-/Empfangseinrichtung SE beginnt nun deshalb mit dem Aussenden einer Mehrzahl von Anfragesignalen ANS (vergleiche Figur 1) auf die ein mobiler Identifikationsgeber IDG, der sich in dem Annäherungsbereich ANB befindet, antworten würde. Nach einem bestimmten Suchzeitintervall ZSE oder nach einer bestimmten Anzahl von ausgesendeten Sendesignalen, auf die kein Antwortsignal eines mobilen Identifikationsgebers jeweils erhalten wurde, stellt die Steuereinrichtung STE fest, dass sich kein mobiler Identifikationsgeber IDG in dem Annäherungsbereich ANB befindet, und geht deshalb in Schritt S10 wieder in den ersten Zustand ZS1 mit geringem Stromverbrauch über.

Schließlich wird in Schritt S11 die Steuereinrichtung STE von dem internen Timer IT zum Zeitpunkt ZP4 wieder in den zweiten Zustand ZS2 versetzt, in dem sie den Helligkeitssensor HS zum Erfassen der Umgebungshelligkeit ansteuert, wobei in diesem Fall wieder der erfasste Umgebungshelligkeitswert HW unterhalb dem vorbestimmten Helligkeitswert SHW liegt, so dass im Schritt S12 die Steuereinrichtung STE wiederum in den dritten Zustand ZS3 übergeht. In Schritt S13 wird nun wieder entsprechend Schritt S9 nach einem (berechtigten) mobilen Identifikationsgeber in dem Annäherungsbereich ANB um das Fahrzeug FZ gesucht, wobei nun innerhalb des Suchzeitintervalls ZSE eine Antwort bzw. ein Antwortsignal AWS von einem mobilen Identifikationsgeber IDG mit einer gültigen Identifizierungskennung von der fahrzeugseitigen Sende-/Empfangseinrichtung SE empfangen wird, und wobei die Steuereinrichtung STE das Vorhandensein eines berechtigten mobilen Identifikationsgebers in dem Annäherungsbereich ANB feststellt. Somit sendet sie in Schritt S14 ein Lichtsteuersignal LSS hier in der Form eines Aktivierungssignals AS an die Lichtsteuereinrichtung LSE, damit diese die Beleuchtungseinrichtung BL zum Beleuchten bzw. zum Abstrahlen von Licht ansteuert. Ist die Beleuchtungseinrichtung BL beispielsweise als ein Blinker ausgebildet, so kann nun ein Blinken für ein vorbestimmtes Zeitintervall bzw. bis zum endgültigen Entriegeln einer Fahrzeugstür durchgeführt werden.

Befindet sich der gerade gefundene mobile Identifikationsgeber IDG für eine längere Zeit in dem Annäherungsbereich ANB bzw. nähert sich weiterhin dem Fahrzeug FZ, so wird in Schritt S15 ein Authentifizierungsvorgang seitens des Fahrzeugs mit dem mobilen Identifikationsgeber IDG durchgeführt, in dem weitere Datentelegramme ausgetauscht werden, wobei hierbei der mobile Identifikationsgeber IDG seinen Authentifizierungscode an das Fahrzeug FZ bzw. an die fahrzeugseitige Sende-/Empfangseinrichtung SE sendet.

Ist schließlich der Fahrzeugnutzer mit seinem mobilen Identifikationsgeber IDG so nahe am Fahrzeug FZ angekommen, dass er einen Türgriff des Fahrzeugs betätigen kann, so wird er in Schritt S16 zur Signalisierung seines Wunsches das Fahrzeug zu betreten, den Türgriff betätigen. War die Authentifizierung in Schritt S15 erfolgreich (bzw. hat die Steuereinrichtung STE einen korrekten Authentifizierungscode des mobilen Identifikationsgebers IDG festegestellt), so wird die Steuereinrichtung STE ein Entriegelungssignal ES entweder direkt an ein bestimmtes Türschloss, oder an eine Zentralverriegelung senden, damit eine bestimmte Tür, wie die Fahrertür, oder allen Türen des Fahrzeugs entriegelt werden.

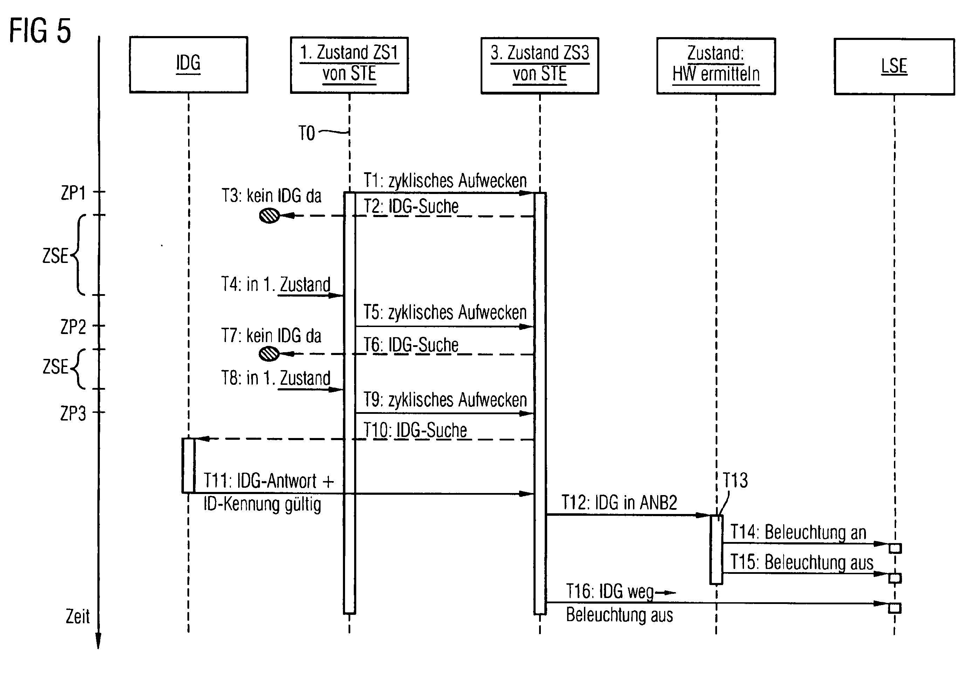

Es sei nun auf Figur 5 verwiesen, in der eine Ausführungsform zum Betreiben einer Zugangsanordnung gezeigt ist. Wiederum wird angenommen, dass sich die Steuereinrichtung STE des Fahrzeugs FZ in einem Ausgangszustand bzw. einem Schritt T0 in einem ersten Zustand ZS1 mit geringem Stromverbrauch befindet. Zu einem Zeitpunkt ZP1 wird die Steuereinrichtung STE in Schritt T1 wieder von dem internen Timer IT geweckt und nun gleich in einen Zustand ZS3 (entsprechend dem dritten Zustand von Figur 4) mit hohem Stromverbrauch versetzt. Die Steuereinrichtung STE steuert nun in Schritt T2 die fahrzeugseitige Sende-/Empfangseinrichtung SE an, damit diese Anfragesignale ANS aussendet, um einen mobilen Identifikationsgeber IDG in dem Annäherungsbereich ANB des Fahrzeugs FZ zu "suchen" (vergleiche dazu auch die Schritte S9, S13 von Figur 4). Nach dem das Suchzeitintervall ZSE zum Auffinden eines mobilen Identifikationsgebers abgelaufen ist bzw. nach dem eine vorbestimmte Anzahl von Anfragesignalen ANS ausgesendet wurden, und kein mobiler Identifikationsgeber auf die Anfragesignale geantwortet hat, wird die Steuereinrichtung STE in Schritt T4 wieder in den ersten Zustand ZS1 mit geringem Stromverbrauch übergehen.

Zu einem Zeitpunkt ZP2 wird in Schritt T5 die Steuereinrichtung STE erneut von dem internen Timer IT geweckt und in den Zustand ZS3 mit hohem Stromverbrauch versetzt, um nach einem mobilen Identifikationsgeber IDG zu suchen. Im Folgenden werden die Schritte T6 bis T8 entsprechend den Schritten T2 bis T4 ausgeführt.

Zu einem Zeitpunkt ZP3 wird nun in Schritt T9 wieder die Steuereinrichtung STE von dem internen Timer IT aufgeweckt und in den Zustand ZS3 versetzt, um die fahrzeugseitige Sende-/Empfangseinrichtung zum Suchen nach einem mobilen Identifikationsgeber anzusteuern. In Schritt T10 beginnt die Sende-/Empfangseinrichtung SE mit dem Aussenden einer Mehrzahl von Anfragesignalen ANS, wobei sich nun ein mobiler Identifikationsgeber IDG in dem Annäherungsbereich ANB des Fahrzeugs FZ befindet. Somit sendet der mobile Identifikationsgeber IDG ein Antwortsignal AWS mit seiner Identifikationsgeberkennung in Schritt T11 zurück zur Sende-/Empfangseinrichtung SE. Als Kriterium zum Auslösen der Beleuchtungseinrichtung für eine Begrüßungsbeleuchtungsfunktionalität ist es denkbar, vorauszusetzen, dass sich ein mobiler Identifikationsgeber IDG innerhalb eines Annäherungsbereichs ANB befindet, der in etwa die im Sende-/Empfangsbereich der Sendeeinrichtung SE entspricht. In diesem Fall könnte die Steuereinrichtung STE sogleich mit Schritt T13 fortfahren, indem sie den Helligkeitssensor HS ansteuert, um die Umgebungshelligkeit zu erfassen. Es ist jedoch auch denkbar, für die Aktivierung der Begrüßungsbeleuchtung als Kriterium zu definieren, dass sich der mobile Identifikationsgeber (mit seinem Kraftfahrzeugnutzer) in einem zweiten Annäherungsbereich ANB2 befinden muss, der innerhalb des Annäherungsbereichs ANB liegt und ein geringeren Abstand bzw. Radius vom Fahrzeug FZ aufweist. Somit wird, um das Vorliegen dieses Kriteriums zu kontrollieren, in Schritt T12 überprüft, ob sich der mobile Identifikationsgeber in dem zweiten Annäherungsbereich ANB2 befindet.

Es wird nun angenommen, dass sich der mobile Identifikationsgeber im zweiten Annäherungsbereich ANB2 befindet (oder wenn das erste Entfernungskriterium genügt, sich zumindest in dem Annäherungsbereich ANB befindet), so dass in Schritt T13 die Steuereinrichtung den Helligkeitssensor HS ansteuert, um einen Umgebungshelligkeitswert zu erfassen. Wird nun ein Umgebungshelligkeitswert erfasst bzw. ermittelt, der unterhalb des vorbestimmten Helligkeitsschwellwerts SHW liegt, so wird in Schritt T14 die Steuereinrichtung STE nach Auswerten des ermittelten Umgebungshelligkeitswerts ein Lichtsteuersignal LSS an die Lichtsteuereinrichtung LSE mit einem Aktivierungssignal abgeben, so dass die Lichtsteuereinrichtung LSE die Beleuchtungseinrichtung BL zum Aktivieren einer Beleuchtung ansteuert. Wird hingegen eine Umgebungshelligkeit erfasst, die unterhalb dem vorbestimmten Helligkeitsschwellwert SHW liegt, so wird gemäß Schritt T15 ein Lichtsteuersignal LSS mit einem Deaktivierungssignal an die Lichtsteuereinrichtung LSE ausgegeben, so dass die Lichtsteuereinrichtung LSE die Beleuchtungseinrichtung derart ansteuert, eine Beleuchtung auszuschalten oder zumindest nicht anzuschalten.

Wird schließlich in Schritt T16 erfasst, dass sich der mobile Identifikationsgeber nicht mehr innerhalb des zweiten Annäherungsbereich ANB2 (oder vielmehr nicht mehr innerhalb des ersten Annäherungsbereich ANB befindet), insbesondere ohne dass eine Entriegelung des Fahrzeugs stattgefunden hat, so gibt die Steuereinrichtung STE ein Lichtsteuersignal LSS an die Lichtsteuereinrichtung LSE aus, in der diese angewiesen wird, die Beleuchtungseinrichtung bzw. dessen Beleuchtung auszuschalten (oder zumindest nicht anzuschalten).

Zusammenfassend kann also festgestellt werden, dass sowohl gemäß der Anordnung nach Figur 4 zunächst in einem Zustand mit mittlerem Stromverbrauch nur die Umgebungshelligkeit erfasst wird und lediglich bei Vorliegen "von Dunkelheit" überhaupt in einen Zustand mit hohem Stromverbrauch (dem eigentlichen Normalbetrieb) gewechselt wird, um die Suche nach einem mobilen Identifikationsgeber durchzuführen. Wird das "Dunkelheitskriterium" nicht erfüllt, so geht die Steuereinrichtung STE wieder in einen Zustand mit geringem Stromverbrauch (Schlafzustand) über, um nach einer gewissen Zeit wieder von einem internen Timer geweckt zu werden.

Ebenso wird bei der Ausführungsform nach Figur 5 erst nach Vorliegen des ersten Kriteriums, hier dass ein mobiler Identifikationsgeber in einem (ersten oder zweiten) Annäherungsbereich um das Fahrzeug vorhanden ist, überhaupt eine Umgebungshelligkeit erfasst. Wird das erste Kriterium nicht erfüllt, so geht die Steuereinrichtung STE ebenso wieder in einen (ersten) Zustand mit geringem Stromverbrauch über, um nach einer gewissen Zeit wieder von einem internen Timer geweckt zu werden, um das Vorhandensein eines mobilen Identifikationsgebers zu überprüfen.

Nur wenn beide Kriterien (Dunkelheit und Vorhandensein eines ID-Gebers) erfüllt sind, so wird schließlich eine Beleuchtungseinrichtung zur Realisierung einer Begrüßungsbeleuchtung aktiviert. Auf diese Weise lässt sich der Stromverbrauch bei der Komfortfunktion "WelcomeLighting" (Begrüßungsbeleuchtung) für eine Zugangsanordnung ZA drastisch reduzieren.

Der Helligkeitssensor kann als ein spezieller Umgebungslichtsensor ausgebildet sein, der die allgemeine Lichtintensität ums Fahrzeug misst. Es ist jedoch auch denkbar, dass die Funktion des Helligkeitssensors von einem kombinierten Regen-Licht-Sensor ausgeführt wird, der auch für die Funktionen der automatischen Wischer- und Fahrlichtsteuerung Verwendung findet.

## Patentansprüche

1. Verfahren zum Betreiben einer Zugangsanordnung (ZA) für ein Fahrzeug (FZ), bei der mittels eines mobilen Identifikationsgebers (IDG) der Zugang zum Fahrzeug erlangbar ist, mit folgenden Schritten:
Ermitteln einer Umgebungshelligkeit (HW) um das Fahrzeug;
Überprüfen der Anwesenheit eines berechtigten mobilen Identifikationsgebers (IDG) in einem Annäherungsbereich (ANB, ANB2) um das Fahrzeug (FZ);
Ausgeben eines Aktivierungssignal (LSS, AS) für eine Beleuchtungsquelle (BL) des Fahrzeugs, wenn die Umgebungshelligkeit einen vorbestimmten Helligkeitswert (SHW) unterschreitet und die Anwesenheit eines berechtigten mobilen Identifikationsgebers in dem Annäherungsbereich erfasst wird,
**dadurch gekennzeichnet,**
**dass** zunächst die Anwesenheit eines berechtigten Identifikationsgebers überprüft wird, und bei erfolgreicher Überprüfung die Übermittlung der Umgebungshelligkeit (HW) um das Fahrzeug durchgeführt wird.

2. Verfahren nach Anspruch 1, bei dem zu definierten Zeitpunkten eine Steuereinrichtung (STE) von einem ersten Zustand (ZS1) mit geringem Stromverbrauch in einen dritten Zustand (ZS3) mit hohem Stromverbrauch geschaltet wird, um die Anwesenheit des berechtigten Identifikationsgebers (IDG) zu überprüfen, wobei bei negativer Überprüfung wieder der erste Zustand (ZS1) mit geringem Stromverbrauch bei der Steuereinrichtung eingeleitet wird.

3. Verfahren nach einem der Ansprüche 1 und 2, bei dem zur Ermittlung der Umgebungshelligkeit (HW) zumindest zwei Umgebungshelligkeitswerte erfasst werden.

4. Verfahren nach Anspruch 3, bei dem bei einem erfassten Umgebungshelligkeitswert größer dem vorbestimmten Helligkeitswert (SHW) und einem zweiten erfassten Umgebungshelligkeitswert kleiner dem vorbestimmten Helligkeitswert (SHW) zumindest ein weiterer Umgebungshelligkeitswert zur Ermittlung der Umgebungshelligkeit erfasst wird.

5. Verfahren nach einem der Ansprüche 1 bis 4, bei dem nach erfolgreicher Überprüfung der Anwesenheit des berechtigten mobilen Identifikationsgebers eine Authentifizierung seitens des Fahrzeugs mit dem Identifikationsgeber durchgeführt wird, um ein Entriegeln von zumindest einer Tür des Fahrzeugs zu ermöglichen.

6. Zugangsanordnung (ZA) für ein Fahrzeug, bei der mittels eines berechtigten mobilen Identifikationsgebers (IDG) der Zugang zu dem Fahrzeug erlangbar ist, mit folgenden Merkmalen:
einem Helligkeitssensor (HS) zum Erfassen der Umgebungshelligkeit (HW) um das Fahrzeug (FZ);
einer Sende-/Empfangseinrichtung (SE) zum Überprüfen der Anwesenheit eines berechtigten Identifikationsgebers in einem Annäherungsbereich (ANB, ANB2) um das Fahrzeug;
einer Steuereinrichtung (STE) zum Ausgeben eines Aktivierungssignals (LSS, AS) für eine Beleuchtungsquelle (BL), wenn die Umgebungshelligkeit einen vorbestimmten Helligkeitswert (SHW) unterschreitet und die Anwesenheit eines berechtigten mobilen Identifikationsgebers in dem Annäherungsbereich erfasst wird,
**dadurch gekennzeichnet dass**,
die Steuereinrichtung (STE) derart ausgelegt ist, nach erfolgreicher Überprüfung der Anwesenheit des mobilen Identifikationsgebers ferner den Helligkeitssensor (HS) anzusteuern, um die Umgebungshelligkeit (HW) erfassen zu lassen.

7. Zugangsanordnung nach Anspruch 6, bei der der Steuereinrichtung (STE) ein Timer zugeordnet ist, der die Steuereinrichtung (STE) von einem ersten Zustand (ZS1) mit geringem Stromverbrauch in einen zweiten Zustand (ZS2) mit mittlerem Stromverbrauch versetzt, in dem die Steuereinrichtung den Helligkeitssensor zum Erfassen der Umgebungshelligkeit ansteuert.

8. Zugangsanordnung nach Anspruch 7, bei der die Steuereinrichtung wieder in den ersten Zustand (ZS1) mit geringem Stromverbrauch übergeht, wenn der von dem Helligkeitssensor (HS) erfasste Umgebungshelligkeitswert (HW) oberhalb des vorbestimmten Helligkeitswerts (SHW) liegt.

9. Zugangsanordnung nach Anspruch 6, bei der der Steuereinrichtung (STE) ein Timer (IT) zugeordnet ist, der die Steuereinrichtung von einem ersten Zustand (ZS1) mit geringem Stromverbrauch in einen dritten Zustand (ZS3) mit hohem Stromverbrauch versetzt, in dem die Steuereinrichtung (STE) die Sende-/Empfangseinrichtung (SE) zum Überprüfen der Anwesenheit des mobilen Identifikationsgebers ansteuert.

10. Zugangsanordnung nach Anspruch 9, bei der die Steuereinrichtung (STE) wieder in den ersten Zustand (ZS1) übergeht, wenn kein mobiler Identifikationsgeber in dem Annäherungsbereich (ANB, ANB2) erfasst wurde.

11. Zugangsanordnung nach einem der Ansprüche 6 bis 10, bei der der Helligkeitssensor (HS) eine Fotodiode, insbesondere mit eingebautem Farbkorrekturfilter für den sichtbaren Wellenlängenbereich, aufweist.

12. Kraftfahrzeug mit einer Zugangsanordnung nach einem der Ansprüche 6 bis 11.

## Claims

1. Method for operating an access arrangement (ZA) for a vehicle (FZ), in which access arrangement (ZA) access can be acquired to the vehicle by means of a mobile identification signal generator (IDG), having the following steps:
determination of an ambient brightness (HW) around the vehicle;
checking of the presence of an authorized mobile identification signal generator (IDG) in an approach region (ANB, ANB2) around the vehicle (FZ);
outputting of an activation signal (LSS, AS) for an illumination source (BL) of the vehicle if the ambient brightness drops below a predetermined brightness value (SHW), and the presence of an authorized mobile identification signal generator in the approach region is sensed,
**characterized**
**in that** firstly checking is carried out for the presence of an authorized identification signal generator, and in the case of successful checking the ambient brightness (HW) is communicated to the vehicle.

2. Method according to Claim 1, in which at defined times a control device (STE) is switched from a first state (ZS1) with low power consumption into a third state (ZS3) with high power consumption in order to check for the presence of the authorized identification signal generator (IDG), wherein in the case of negative checking the first state (ZS1) with low power consumption is initiated again at the control device.

3. Method according to one of Claims 1 and 2, in which at least two ambient brightness values are sensed for the determination of the ambient brightness (HW).

4. Method according to Claim 3, in which in the case of a sensed ambient brightness value which is higher than the predetermined brightness value (SHW) and a second sensed ambient brightness value which is lower than the predetermined brightness value (SHW) at least one further brightness value is sensed for the determination of the ambient brightness.

5. Method according to one of Claims 1 to 4, in which after successful checking for the presence of the authorized mobile identification signal generator authentication is carried out on the part of the vehicle with the identification signal generator in order to permit unlocking of at least one door of the vehicle.

6. Access arrangement (ZA) for a vehicle in which access to the vehicle can be acquired by means of an authorized mobile identification signal generator (IDG), having the following features:
a brightness sensor (HS) for sensing the ambient brightness (HW) around the vehicle (FZ);
a transceiver device (SE) for checking for the presence of an authorized identification signal generator in an approach region (ANB, ANB2) around the vehicle;
a control device (STE) for outputting an activation signal (LSS, AS) for an illumination source (BL) if the ambient brightness drops below a predetermined brightness value (SHW) and the presence of an authorized mobile identification signal generator in the approach region is sensed,
**characterized in that**
the control device (STE) is configured in such a way that after successful checking for the presence of the mobile identification signal generator it further actuates the brightness sensor (HS) in order to permit the ambient brightness (HW) to be sensed.

7. Access arrangement according to Claim 6, in which the control device (STE) is assigned a timer which changes the control device (STE) from a first state (ZS1) with low power consumption into a second state (ZS2) with average power consumption, in which second state (ZS2) the control device actuates the brightness sensor for the sensing of the ambient brightness.

8. Access arrangement according to Claim 7, in which the control device goes into the first state (ZS1) with low power consumption again if the ambient brightness value (HW) which has been sensed by the brightness sensor (HS) is above the predetermined brightness value (SHW).

9. Access arrangement according to Claim 6, in which the control device (STE) is assigned a timer (IT) which changes the control device from a first state (ZS1) with low power consumption into a third state (ZS3) with high power consumption, in which third state (ZS3) the control device (STE) actuates the transceiver device (SE) for the checking for the presence of the mobile identification signal generator.

10. Access arrangement according to Claim 9, in which the control device (STE) goes into the first state (ZS1) again if a mobile identification signal generator has not been sensed in the approach region (ANB, ANB2).

11. Access arrangement according to one of Claims 6 to 10, in which the brightness sensor (HS) has a photodiode, in particular with installed colour correction filter for the visible wavelength range.

12. Motor vehicle having an access arrangement according to one of Claims 6 to 11.

## Revendications

1. Procédé pour exploiter un dispositif d'accès (ZA) pour un véhicule (FZ), dans lequel, au moyen d'un émetteur de signal d' identification mobile (IDG), on peut obtenir l'accès au véhicule, le procédé comprenant les étapes suivantes :
détermination d'une luminosité ambiante (HW) autour du véhicule ;
vérification de la présence d'un émetteur de signal d'identification mobile (IDG) autorisé dans une zone de proximité (ANB, ANB2) du véhicule (FZ) autour de celui-ci ;
émission d'un signal d'activation (LSS, AS) pour une source d'éclairage (BL) du véhicule lorsque la luminosité ambiante passe en-dessous d'une valeur de luminosité prédéterminée (SHW) et que la présence d'un émetteur de signal d'identification mobile autorisé est détectée dans la zone de proximité,
**caractérisé en ce que**
tout d'abord, la présence d'un émetteur de signal d'identification autorisé est vérifiée et que, dans le cas d'une vérification réussie, la transmission de la luminosité ambiante (HW) autour du véhicule est réalisée.

2. Procédé selon la revendication 1, dans lequel, à des moments définis, un dispositif de pilotage (STE) commute d'un premier état (ZS1) à faible consommation de courant vers un troisième état (ZS3) à forte consommation de courant afin de vérifier la présence de l'émetteur de signal d' identification autorisé (IDG), dans lequel, en cas de vérification négative, le premier état (ZS1) à faible consommation de courant est alors réinitialisé au niveau du dispositif de pilotage.

3. Procédé selon l'une quelconque des revendications 1 et 2, dans lequel, pour déterminer la luminosité ambiante (HW), au moins deux valeurs de luminosité ambiante sont captées.

4. Procédé selon la revendication 3, dans lequel, pour une valeur de luminosité ambiante captée supérieure à la valeur de luminosité prédéterminée (SHW) et une seconde valeur de luminosité ambiante captée inférieure à la valeur de luminosité prédéterminée (SHW), au moins une autre valeur de luminosité ambiante est captée pour déterminer la luminosité ambiante.

5. Procédé selon l'une quelconque des revendications 1 à 4, dans lequel, après vérification réussie de la présence de l'émetteur de signal d'identification mobile autorisé, une authentification du côté du véhicule est réalisée avec l'émetteur de signal d'identification afin de permettre un déverrouillage d'au moins une porte du véhicule.

6. Dispositif d'accès (ZA) pour un véhicule, dans lequel, au moyen d'un émetteur de signal d'identification mobile autorisé (IDG), on peut obtenir l'accès au véhicule, ayant les caractéristiques suivantes :
un capteur de luminosité (HS) pour capter la luminosité ambiante (HW) autour du véhicule (FZ) ;
un dispositif d'émission-réception (SE) pour vérifier la présence d'un émetteur de signal d'identification mobile autorisé dans une zone de proximité (ANB, ANB2) du véhicule autour de celui-ci ;
un dispositif de pilotage (STE) pour émettre un signal d'activation (LSS, AS) pour une source d'éclairage (BL) lorsque la luminosité ambiante passe en- dessous d'une valeur de luminosité prédéterminée (SHW) et que la présence d'un émetteur de signal d'identification mobile autorisé est détectée dans la zone de proximité,
**caractérisé en ce que**
le dispositif de pilotage (STE) est conçu de sorte qu'il pilote, après vérification réussie de la présence de l'émetteur de signal d'identification mobile, également le capteur de luminosité (HS) afin de le faire capter la luminosité ambiante (HW).

7. Dispositif d'accès selon la revendication 6, dans lequel une minuterie est attribuée au dispositif depilotage (STE), laquelle fait passer le dispositif de pilotage (STE) d'un premier état (ZS1) à faible consommation d'énergie à un deuxième état (ZS2) à consommation d'énergie moyenne, dans lequel le dispositif depilotage pilote le capteur de luminosité pour la captation de la luminosité ambiante.

8. Dispositif d'accès selon la revendication 7, dans lequel le dispositif de pilotage repasse au premier état (ZS1) à faible consommation de courant, lorsque la valeur de luminosité ambiante (HW) captée par le capteur de luminosité (HS) se situe au-dessus de la valeur de luminosité prédéterminée (SHW).

9. Dispositif d'accès selon la revendication 6, dans lequel une minuterie (IT) est attribuée au dispositif de pilotage (STE), laquelle fait passer le dispositif de pilotage d'un premier état (ZS1) à faible consommation de courant à un troisième état (ZS3) à forte consommation de courant, dans lequel le dispositif de pilotage (STE) pilote le dispositif d'émission-réception (SE) pour la vérification de présence de l'émetteur de signal d'identification mobile .

10. Dispositif d'accès selon la revendication 9, dans lequel le dispositif de pilotage (STE) repasse au premier état (ZS1) quand aucun émetteur de signal d'identification mobile n'a été détecté dans la zone de proximité (ANB, ANB2).

11. Dispositif d'accès selon l'une quelconque des revendications 6 à 10, dans lequel le capteur de luminosité (HS) présente une photodiode, en particulier avec un filtre de correction de couleur intégré pour la zone de longueurs d'ondes visibles.

12. Véhicule automobile avec undispositif d'accès selon l'une quelconque des revendications 6 à 11.
